**Europäisches Patentamt**

**European Patent Office**

**Office européen des brevets**

(11) Veröffentlichungsnummer: **0 144 533**

**A2**

(12) **EUROPÄISCHE PATENTANMELDUNG**

(21) Anmeldenummer: **84109786.8**

(22) Anmeldetag: **16.08.84**

(51) Int. Cl.⁴: **G 06 K 19/06**

(30) Priorität: **03.12.83 DE 3343856**

(43) Veröffentlichungstag der Anmeldung:
**19.06.85 Patentblatt 85/25**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Baum, Wolfgang, Ing.grad.**
**Plötzenstrasse 102**
**D-3200 Hildesheim(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) **Kreditkarte.**

(57) Für die bargeldlose Abrechnung von Werteinheiten bei Benutzung eines Gerätes wird eine in einen Kartenleser einsteckbare Kreditkarte vorgeschlagen, auf welcher sich in gedruckter Schaltungstechnik mittels eines Stromstoßes zerstörbare Widerstände befinden, wobei jeder Widerstand einer Gebühreneinheit entspricht.

Die zerstörbaren Widerstände sind Bestandteil einer Widerstandskette, die aus Längs- und Querwiderständen besteht, wobei letztere die zerstörbaren Widerstände bilden, welche aus gebondeten Golddrähten bestehen. Die Längswiderstände werden durch den Stromstoß nicht zerstört, so daß nach Zerstörung eines Querwiderstandes der Gesamtwiderstand der Widerstandkette immer größer wird. Durch eine Widerstandsmessung kann in dem Kartenleser die Zahl der noch vorhandenen Golddrähte ermittelt und angezeigt werden; außerdem wird durch den gemessenen Widerstandswert die Energie errechnet, mit welcher der nächste Golddraht zerstört werden kann.

Die Kreditkarte bietet eine hohe Manipulationssicherheit, denn jede Manipulation kann nur zur Zerstörung der Golddrähte, also zum Nachteil des Manipulierenden führen.

EP 0 144 533 A2

Kreditkarte

Die Erfindung betrifft eine Kreditkarte für die Erfassung und bargeldlose Abrechnung von Werteinheiten mittels eines Kartenlesers. Außerdem befaßt sich die Erfindung noch mit einem Verfahren zur Erfassung und Entwertung von auf einer Kreditkarte befindlichen Werteinheiten, welche durch Widerstandswerte repräsentiert werden.

Kreditkarten der eingangs genannten Art lassen sich überall dort verwenden, wo normalerweise Geld oder Wertmarken in Automaten oder dgl. Geräte eingeworfen werden müssen, um den Automaten benutzen zu können. Anstatt ein Geldstück in den Automaten einzuwerfen, braucht lediglich die Kreditkarte in einen Schlitz eines zugeordneten Kartenlesers gesteckt zu werden, um den Automaten zur Benutzung freizugeben.

Die Kreditkarten besitzen somit den Vorteil, daß der Inhaber weniger Bargeld mit sich zu führen braucht, denn zur Bezahlung wird die Kreditkarte herangezogen, die zuvor natürlich käuflich erworben werden muß.

Entsprechend dem als Beispiel geschilderten Anwendungs-

R.Nr. 1796 0144533

zweck stehen auf der Kreditkarte in irgendeiner Form
Werteinheiten bzw. Gebühreneinheiten zur Verfügung, die
der Inhaber beim Kartenkauf bezahlt. Bei Benutzung der
Kreditkarte, z. B. für einen Spielautomaten, für ein Telefon oder für ein Fernsehgerät usw., wird die Kreditkarte
dann praktisch - vergleichbar mit einer Fahrkarte -
entwertet, indem der Kartenleser die verbrauchten Gebühreneinheiten feststellt, mit der Folge, daß nachher auf der
Kreditkarte entsprechend weniger Gebühreneinheiten zur Verfügung stehen, bis alle Gebühreneinheiten verbraucht sind.
Der Benutzer ist dann veranlaßt, die Kreditkarte - gegen
Bezahlung - wieder mit neuen Gebühreneinheiten zu "laden"
bzw. zu versehen.

Mit der heute zur Verfügung stehenden Technologie ist es
schon möglich, eine Kreditkarte mit integrierten Schaltkreisen, umfassend etwa einen Speicher und einen Mikroprozessor, herzustellen. Bei einer solchen Kreditkarte
kann der Speicher mit einem beliebigen Wert, der einem
Geldbetrag entspricht, geladen werden. So ist es z. B.
denkbar, daß von einer Bank das Gehalt des Karteninhabers
in den Speicher eingelesen wird. Bei Benutzung der Karte
können durch den elektronischen Kartenleser die verbrauchten
Gebühreneinheiten ermittelt und der Speicherinhalt entsprechend erniedrigt werden, bis der Speicher leer ist und mit einem neuen "Betrag" geladen wird.

Eine solche Kreditkarte besitzt allerdings den gravierenden
Nachteil, daß sie nicht sicher gegen Manipulationen geschützt
ist. Für einen Fachmann besteht nämlich grundsätzlich die
Möglichkeit, den Speicherinhalt zu beeinflussen und zu verfälschen, so daß das System mit einem elektronischen Speicher
in der Praxis als untauglich angesehen werden muß.

Es sind auch schon mechanische Zählwerke bekannt, bei denen
mit zugeordneten Auflade- und Leseautomaten Gebühreneinheiten
ein- und ausgelesen werden können, um ein Fernsehgerät oder
ein Telefon zu benutzen (Firmen-Prospekt "4000.5.83 wen" der
Firma AVM Schmelter GmbH & Co KG).

Die Verwendung mechanischer Zählwerke anstelle elektronischer Speicher erfordert allerdings einen erheblichen
Platzbedarf, was zu quaderförmigen unhandlichen Abmessungen führt. Die Handlichkeit einer flachen Kreditkarte - nach
Art der bekannten Scheckkarte - geht daher verloren. Ferner
erweist sich der Einsatz mechanischer Zähler als kostenintensiv, und schließlich ist die oben schon angesprochene
Manipulationssicherheit auch hier nicht als ausreichend anzusehen.

Der Erfindung liegt daher die Aufgabe zugrunde, eine Kreditkarte zu schaffen, welche einfach und kostengünstig herstellbar ist und eine erhöhte Sicherheit gegen Manipulationen bietet.

Zur Lösung dieser Aufgabe ist die im Oberbegriff des Anspruchs 1 genannte Kreditkarte dadurch gekennzeichnet, daß
jeder Werteinheit ein zerstörbarer elektrischer Widerstand
auf der Kreditkarte zugeordnet ist.

Der Erfindung liegt der Gedanke zugrunde, eine Kreditkarte
als "Einweg-Kreditkarte" zu schaffen, bei der abweichend von
den eingangs geschilderten Lösungen darauf verzichtet wird,
nach Entwertung aller vorhandenen Werteinheiten ein Nachladen vorzusehen. Wenn die neuartige Kreditkarte verbraucht
ist, wird sie einfach durch eine neue Kreditkarte ersetzt.

Die Erfindung ermöglicht es, die Kreditkarte in einer handlichen flachen Form herzustellen, so daß der Inhaber sie
ähnlich einer Scheckkarte mit sich führen kann. Die auf
der Karte befindlichen Werteinheiten werden in neuartiger
Weise durch elektrische Widerstände gebildet, die mittels
eines Stromes zerstört werden können. Diese Lösung erlaubt
in vorteilhafter Weise die Anwendung der an sich bekannten
gedruckten Schaltungstechnik, denn die Widerstände lassen
sich auf einfache Weise durch gedruckte Leiterbahnen bilden,
wobei in zweckmäßiger Ausgestaltung als Trägermaterial Keramik verwendet werden kann.

Für die zerstörbaren Widerstände können zweckmäßigerweise Golddrähte verwendet werden, wie sie in der gedruckten Schaltungstechnik schon als sogenannte Bond-Drähte bekannt sind. Die Herstellung der erfindungsgemäßen Kreditkarte ist also äußerst einfach und preiswert.

In einer vorteilhaften Ausführungsform befinden sich auf der Kreditkarte mehrere Widerstandsketten aus abwechselnd aufeinanderfolgenden Längs- und Querwiderständen, wobei die Querwiderstände jeweils die zerstörbaren Widerstände sind, denen die Gebühreneinheiten bzw. die Werteinheiten zugeordnet werden. Die Erfindung basiert nämlich auf einem Verfahren für die Benutzung der neuen Kreditkarte, bei welchem mit einem Kartenleser, in den die Kreditkarte eingesteckt wird zunächst der Widerstand einer Widerstandskette elektronisch nach Art einer bekannten Widerstandsmessung ermittelt wird. Aufgrund des vorhandenen Widerstandswertes kann dann die Stromstärke bestimmt werden, die zur Zerstörung eines Querwiderstandes erforderlich ist. Die Zerstörung erfolgt dadurch, daß der entsprechende Golddraht zum Schmelzen gebracht wird.

Nachdem ein Widerstand durch einen Stromstoß zerstört worden ist, wird eine erneute Widerstandsmessung durchge-

0144533

führt und auf dem Kartenleser angezeigt. Dadurch besteht eine Kontrollmöglichkeit für den Karteninhaber, daß tatsächlich eine Werteinheit bzw. Gebühreneinheit "entwertet" wurde. Als nächstes erfolgt dann die Freigabe eines angeschlossenen Gerätes, etwa eines Spielautomaten oder eines Telefons.

In der beschriebenen Weise kann die Karte sooft verwendet werden, bis alle Widerstände zerstört, also alle Werteinheiten verbraucht sind.

Ein besonderer Vorteil der Erfindung besteht noch in der hohen Manipulatonssicherheit, denn jede Manipulation kann nur zur Zerstörung der Golddrähte führen, d. h., eine etwaige Manipulation führt zum Nachteil des Manipulierenden.

Weitere zweckmäßige Ausgestaltungen der Erfindung sind der Zeichnung zu entnehmen und in den Unteransprüchen beschrieben.

Nachfolgend wird die Erfindung anhand des in der Zeichnung dargestellten Ausführungsbeispiels näher erläutert. Es zeigen:

Fig. 1    ein elektrisches Schaltbild einer Widerstandskette und in schematischer Darstellung einen Kartenleser, und

Fig. 2     eine Draufsicht auf eine Kreditkarte mit gedruckten Leiterbahnen.

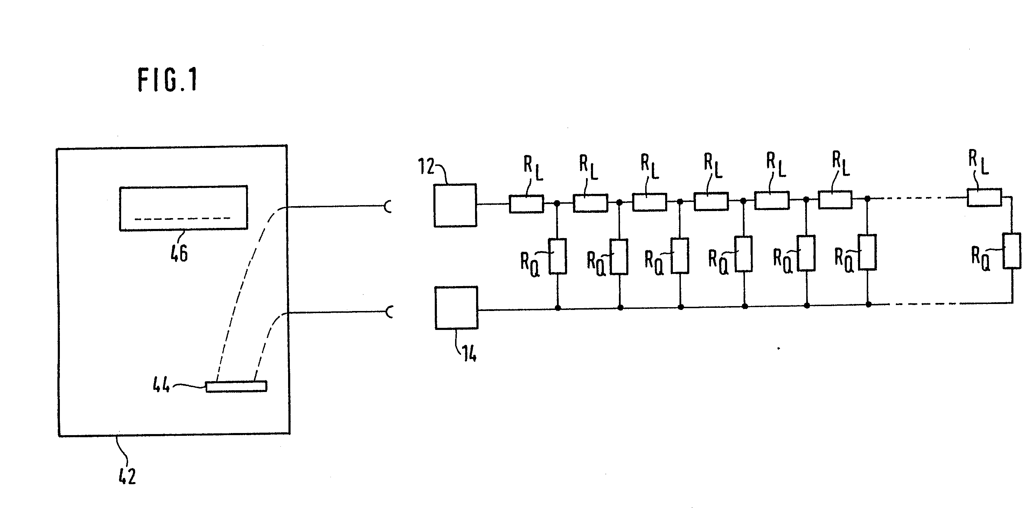

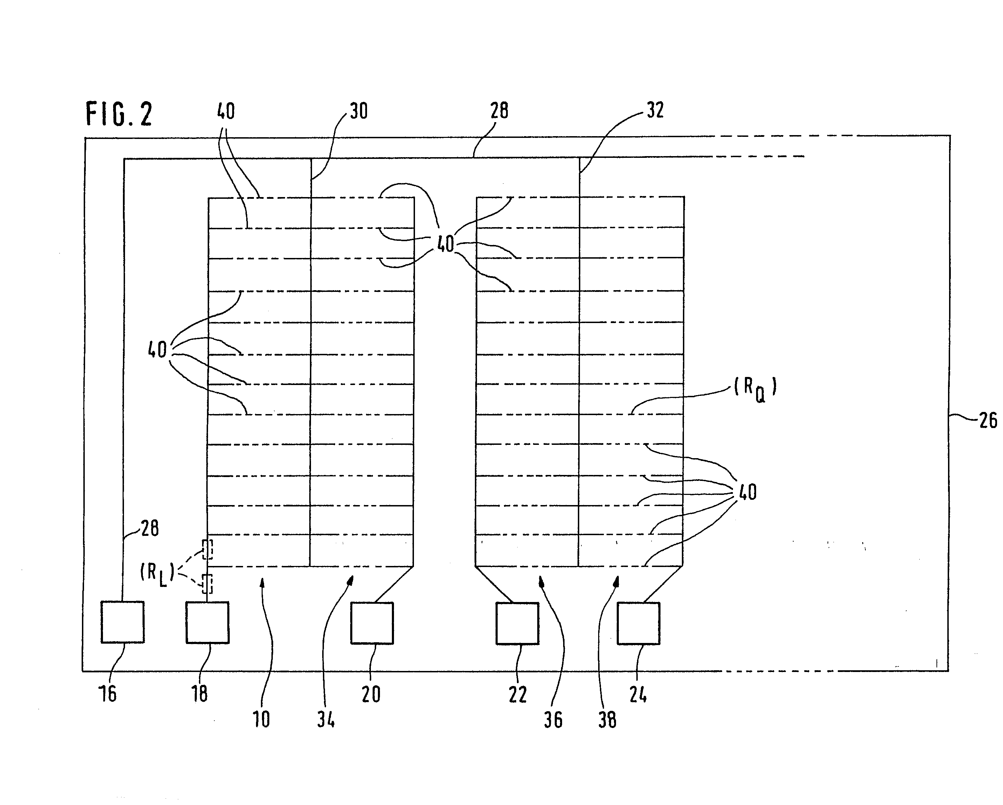

Die in Fig. 1 zeichnerisch dargestellte Widerstandskette
10 besteht aus Längswiderständen $R_L$ und Querwiderständen
$R_Q$ . Beginnend mit einem Längswiderstand $R_L$ folgt jeweils ein Querwiderstand $R_Q$ auf jeden Längswiderstand.
Der Anfang und das Ende der Widerstandskette 10 sind jeweils mit einer Kontaktfläche 12 und 14 verbunden. Sowohl diese beiden Kontaktflächen 12 und 14 als auch die
Widerstandskette 10 befinden sich auf einer Kreditkarte
26 (vgl. Fig. 2).

Die Kreditkarte 26 kann in einen Schlitz 44 eines elektronischen Kartenlesers 42 gesteckt werden, und über die
beiden Kontaktflächen 12 und 14 in Fig. 1 kann ein Strom
durch die Widerstandskette 10 geschickt werden. Durch den
Stromstoß wird der jeweils vordere bzw. nächste Querwiderstand $R_Q$ zerstört, wobei die Querwiderstände durch
Golddrähte 40 (Bond-Drähte) gebildet sind. Die Längswiderstände $R_L$ sind so bemessen und ausgelegt, daß sie durch
den Stromstoß nicht beeinflußt werden. Der Widerstand
der gesamten Widerstandskette 10 wird also nach jeder
Zerstörung eines Querwiderstandes $R_Q$ größer.

Jeder Querwiderstand $R_Q$ entspricht einer Gebühreneinheit und durch eine Widerstandsmessung der Widerstandskette
10 mittels des Kartenlesers 42 kann auf einfache Weise
die Zahl der nicht zerstörten Querwiderstände $R_Q$ - also
die Zahl der noch zur Verfügung stehenden Gebühreneinheiten - bestimmt und auf einer Anzeige 46 angezeigt
werden.

Wie in der Draufsicht in Fig. 2 zu erkennen ist, besteht
die Kreditkarte 26 im Prinzip aus mehreren Widerstandsketten 10, 34, 36, 38, die als gedruckte Leiterbahnen
auf einem Keramikkörper als Trägermaterial angeordnet
sind. In der Zeichnung sind lediglich vier Widerstandsketten 10, 34, 36, und 38 dargestellt; in der Praxis
sind natürlich mehrere solcher Widerstandsketten auf
einem Keramikkörper möglich.

Die Widerstandsketten 10, 34, 36 und 38 sind als eine
gedruckte Schaltung ausgeführt, wobei die Querwiderstände durch gebondete Golddrähte 40 ausgebildet sind,
was in Fig. 2 durch jeweils eine gepunktete Linie dargestellt ist. Die Längswiderstände (vgl. $R_L$ in Fig. 1)
sind durch den ohmschen Widerstand des jeweiligen Leiterbahnenabschnittes selbst gebildet, wobei diese Leiterbahnen in an sich bekannter Weise aus Silber- Paladium
bestehen, wie dies bei Verwendung von Keramik als Trägermaterial üblich ist.

Die gedruckten Leiterbahnen münden jeweils in Kontaktflächen 16, 18, 20, 22 und 24, die sich am Rande der
Kreditkarte 26 befinden. Über diese Kontaktflächen kann
mit dem Kartenleser 42 eine Widerstandsmessung einer
Widerstandskette 10, 34, 36 und 38 durchgeführt und ein
Strom durch eine solche Widerstandskette geschickt werden.

Auf der Kreditkarte 26 ist den einzelnen Widerstandsketten 10, 34, 36 und 38 eine gemeinsame Masseleitung 28
mit der Kontaktfläche 16 zugeordnet. Die beiden Kontaktflächen 16 und 18 können somit für die Widerstandsmessung
und zur Stromzufuhr für die Widerstandskette 10 herangezogen werden, während beispielsweise der Widerstandskette 34 neben der gemeinsamen Kontaktfläche 16 noch die
Kontaktfläche 20 zugeordnet ist. Durch die gemeinsame
Masseleitung 28 bzw. durch die gemeinsame Kontaktfläche
16 ergibt sich auf der Kreditkarte 26 eine Platzersparnis, so daß sich mehrere Widerstandsketten auf der Kreditkarte 26 anordnen lassen.

Ebenfalls zu einer Platz- und auch zu einer Materialersparnis führt die Lösung, jeweils zwei benachbarten Widerstandsketten 10, 34 und 36, 38 eine gemeinsame Mitten-
Leiterbahn 30 bzw. 32 zuzuordnen. Diese Mitten-Leiterbahnen 30 und 32 sind ebenso wie die die einzelnen Längs
widerstände bildenden Leiterbahnen als gedruckte Leiterbahnen ausgebildet, während die Querwiderstände durch ge-

0144533

R.Nr. 1796

bondete Golddrähte 40 gebildet sind.

Bei dem erfindungsgemäßen Verfahren unter Verwendung
der neuartigen Kreditkarte 26 wird letztere in den Schlitz
44 des elektronischen Kartenlesers 42 gesteckt. Mit Hilfe
einer Widerstandsmessung wird dann in der jeweiligen
Widerstandskette 10, 34, 36 und 38 die Zahl der noch vorhandenen Golddrähte 40 ermittelt und auf einer Anzeige 46
angezeigt.

An Hand des gemessenen Widerstandswertes wird die Energie
errechnet, mit welcher der nächste Golddraht 40 zerstört
werden kann. Eine erneute Widerstandsmessung muß dann die
Zerstörung bestätigen, und erst danach wird ein angeschlossenes Gerät, z. B. ein Spielautomat oder ein Telefon, zur Benutzung freigegeben.

Die Vorgänge "Messen", "Zerstörung eines Golddrahtes 40",
"erneute Messung und Freigabe" erfolgen in vorgegebenen
Zeitabständen von z. B. 2 ms.

Die Erfindung bietet noch den Vorteil, daß auf der Kreditkarte 26 eine Codierung vorgesehen werden kann, beispielsweise um die Verwendung der Kreditkarte nur für ganz bestimmte Anwendungsfälle zu gewährleisten. Die Codierung
erfolgt in einfacher Weise durch Widerstände, d. h., der
Code steckt in dem Widerstandswert, der über eine Messung
bestimmt wird. Da es hier auf eine Zerstörung eines Wider-

0144533
R.Nr. 1796

standes nicht ankommt, kann auf die Golddrähte 40 verzichtet werden; es genügen vielmehr die üblichen gedruckten
Leiterbahnen. Durch die erwähnte Codierung läßt sich z. B.
sicherstellen, daß die Kreditkarte 26 nur bei solchen Geräten verwendet werden kann, deren Benutzung jeweils
gleiche Gebühreneinheiten voraussetzt.

Es sei noch erwähnt, daß sich die neue Kreditkarte 26
wegen ihrer handlichen und flachen Form vorzüglich dazu
eignet, mittels eines Verkaufsautomaten - ähnlich einem
Fahrkartenautomaten - verkauft zu werden.

BLAUPUNKT-WERKE GMBH 3200 Hildesheim

R.Nr. 1796

P a t e n t a n s p r ü c h e

1. Kreditkarte für die Erfassung und bargeldlose Abrechnung von Werteinheiten mittels eines Kartenlesers, __dadurch gekennzeichnet__, daß jeder Werteinheit ein zerstörbarer elektrischer Widerstand ($R_Q$; 40) auf der Kreditkarte (26) zugeordnet ist.

2. Kreditkarte nach Anspruch 1, __gekennzeichnet durch__ mindestens eine Widerstandskette (10) aus abwechselnd aufeinanderfolgenden Längs($R_L$)- und Querwiderständen, wobei die Querwiderstände ($R_Q$) die zerstörbaren Widerstände sind.

3. Kreditkarte nach Anspruch 2, __dadurch gekennzeichent__, daß die Kreditkarte (26) einen Keramikkörper umfaßt, auf welchem die Widerstandsketten (10) nach Art einer gedruckten Schaltung als gedruckte Leiterbahnen (28, 30, 40) angeordnet sind.

4.    Kreditkarte nach einem der vorhergehenden Ansprüche,
dadurch gekennzeichnet, daß der zerstörbare Widerstand ein
Golddraht (40) ist.


5.    Kreditkarte nach einem der vorhergehenden Ansprüche
2 - 4, dadurch gekennzeichnet, daß jede Widerstandskette (10, 34, 36, 38) mit zwei Kontaktflächen (16 - 24)
verbunden ist.


6.    Kreditkarte nach einem der vorhergehenden Ansprüche
2 - 5, dadurch gekennzeichnet, daß den Widerstandsketten
(10, 34, 36, 38) eine gemeinsame Leiterbahn als Masseleitung (28) zugeordnet ist.


7.    Kreditkarte nach einem der vorhergehenden Ansprüche
2 - 6, dadurch gekennzeichnet, daß jeweils zwei benachbarte Widerstandsketten (10, 34; 36, 38) eine gemeinsame
Mitten-Leiterbahn (30, 32) besitzen.


8.    Kreditkarte nach einem der vorhergehenden Ansprüche,
dadurch gekennzeichnet, daß die Kreditkarte (26) codiert ist
und das der Code durch einen Widerstandswert gebildet ist.


9.    Verfahren zur Erfassung und Entwertung von auf einer
Kreditkarte befindlichen Werteinheiten, welche durch Widerstandswerte repräsentiert werden, gekennzeichnet durch die
folgenden Verfahrensschritte:

a) Messung des vorhandenen Widerstandswertes

b) Bestimmung der für die Zerstörung eines Widerstandes (40) erforderlichen Energie,

c) Zerstörung eines eine Werteinheit darstellenden Widerstandes (40),

d) Messung des neuen Widerstandswertes und,

e) Freigabe eines angeschlossenen Gerätes, für dessen Benutzung eine Gebühr in Form der Werteinheit verlangt wird.

**FIG.1**

0144533

FIG.2